# EUROPEAN PATENT SPECIFICATION

(11) **EP 0 356 798 B1**
(45) Date of publication and mention of the grant of the patent: **29.12.1993**
(21) Application number: 89114982.5
(22) Date of filing: 11.08.1989
(51) Int. Cl.: F16H 55/38, F16H 7/02

(54) **Flat belt and pulley transmission**
Bandgetriebe und Riemenscheibe
Transmission à courroie et poulie

(30) Priority: 12.08.1988 JP 107080/88; 12.08.1988 JP 107081/88
(43) Date of publication of application: 07.03.1990
(73) Proprietor: BANDO CHEMICAL INDUSTRIES, LIMITED, Hyogo-ku Kobe-shi (JP)
(72) Inventor: Hasebe, Kaneteru Bando Chemical Industries Ltd., Hyogo-ku Kobe-shi (JP); Matsuoka, Hiroshi Bando Chemical Industries Ltd., Hyogo-ku Kobe-shi (JP); Yanagi, Kyotaro Bando Chemical Industries Ltd., Hyogo-ku Kobe-shi (JP)
(74) Representative: Gauger, Hans-Peter, Dipl.-Ing.

(56) References cited:
- FR-A- 580 601
- FR-A- 1 131 923
- GB-A- 1 051 587
- JP-A-50 121 147
- JP-A-58 189 844
- JP-A-62 002 514

## Description

### Technical field & background of the invention

The present invention relates to a flat belt and pulley transmission comprising two spaced flat pulleys and a single flat belt reeved around these flat pulleys.

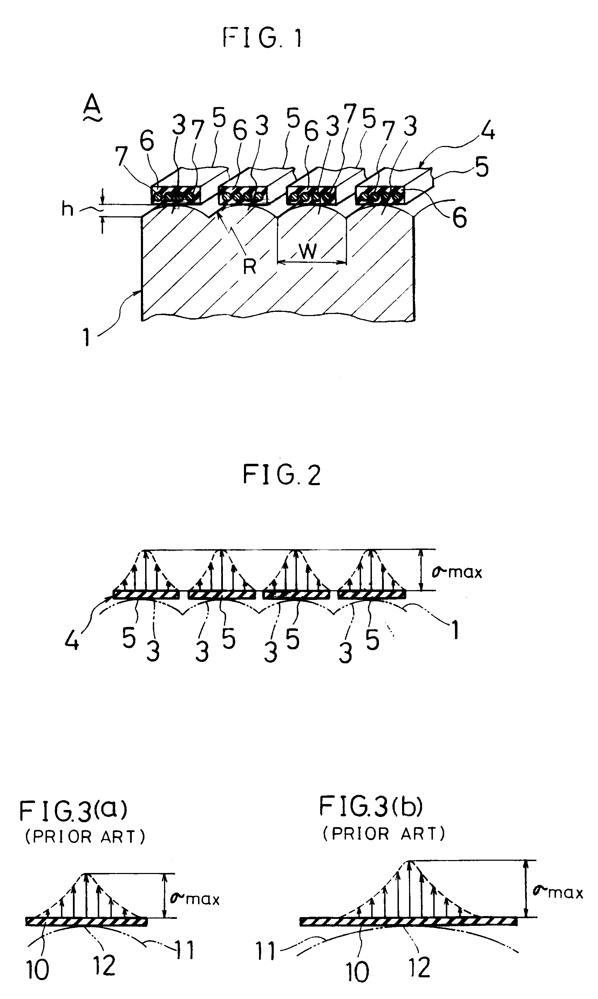

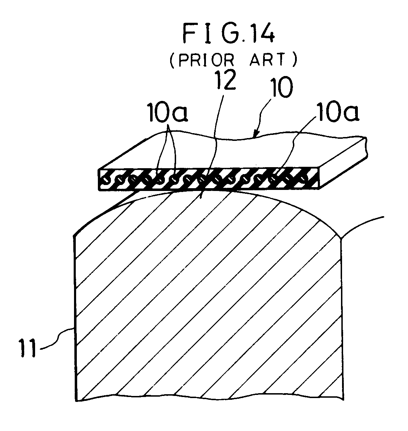

Flat belt and pulley transmissions of the type mentioned are well known for the purposes of transmitting a load. As disclosed for example in FR-A-1 131 923 such transmissions may comprise either a single flat belt which, as also shown in Fig. 14, co-operates with a crown which is formed on the outer periphery of each pulley. Alternatively such transmissions may comprise a flat belt the belt body of which has a plurality of embedded endless cores and is provided with at least one separating cut that extends between two adjacent cores in the longitudinal direction of the belt whereby, as also shown in Fig. 1, such a separating cut is aligned with a part of each pulley other than each of at least two crowns that are provided on the outer periphery of the pulleys and spaced in the width direction thereof for respectively co-operating with an adjacent singular belt-part.

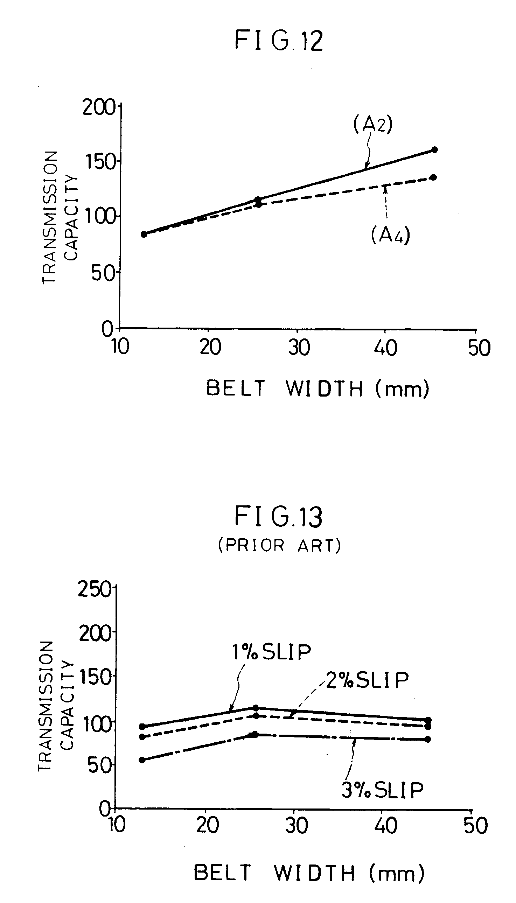

In search of the relation between the width of the belt and the transmission capacity it has been found that, as shown in Fig. 13, when the transmission capacity was increased in accordance with an increase of the belt width within a relatively narrow range of 12.7 mm - 25.4 mm, the transmission capacity was not further increased even if the belt width was increased to 45 mm, at which width the capacity was almost the same as that when the width was 25.4 mm. ("transmission capacity" on the ordinate of the graph shown in Fig. 13 is relatively shown by representing a predetermined value as a reference). This result accordingly shows the existence of a limit to which the belt width could be increased for improving the transmission capacity. The conditions under which such results were obtained comprised a shaft load of 200 kg, i.e. a load applied to the rotation shaft of one pulley in a direction increasing the distance between the shafts of the two transmissions pulleys, a diameter of 100 mm of each pulley, a radius of 450 mm of a singular crown in the center of each pulley, and a driving speed of 2600 rpm of the pulley on the driving side of the transmission. The slip ratio between the pulleys and the belt was 1 % - 3 %.

With this result in mind, it was further found that the bearing stress, i.e. the stress acting between the belt and the pulleys, was not uniformly distributed in the belt. It was accordingly determined that due to this non-uniform distribution characteristic of the bearing stress no increase of the transmission capacity could be awaited. More specifically, because the crown 12 as shown in Fig. 14 was convex at the center in the width direction of the pulley 11, it was found that the bearing stress of the belt 10 concentrated or peaked at the center thereof corresponding to the crown 12 as shown in Fig. 3(a). Therefore, as shown in Fig. 3(b), when the width of the belt 10 is increased, a portion which does not contribute to load transmission because the bearing stress is zero, is generated at both ends in the width direction of the belt due to the peaking of the bearing stress in the center. The width of contact of the belt 10 with the pulley 11 will accordingly not be increased even if the belt width is further increased. A maximum bearing stress δ max at a part corresponding to the crown 12 of the pulley 11 will also be increased in accordance with an increase in the belt width, and the shearing stress on the belt 10 will be increased at the time of transmission, which exceeds the capacity of the belt, causing creeping movement and destruction of the belt, with the result that transmission capacity cannot be effectively increased.

However, if there is no crown on the outer periphery of the pulley, tension generated in the belt is not uniform and snaking movement of the belt is generated, causing the belt to be destroyed at an early stage of transmission.

### Summary of the invention

According to the present invention there is provided a flat belt and pulley transmission comprising two spaced flat pulleys and a single flat belt reeved around these flat pulleys, wherein
- said flat belt comprises a belt body having a plurality of embedded endless cores and being provided with at least one groove that extends between to adjacent cores in the longitudinal direction of its inner peripherial surface which is in contact with said flat pulleys, said groove having such a depth that its bottom is nearer to the outer peripherial surface of said belt body than the position of said adjacent cores;
- each of said flat pulleys has at least two crowns on its outer periphery and spaced in the width direction thereof so that the groove of said flat belt is aligned with a part of the pulley other than that on which such a crown is formed.

The flat belt and pulley transmission of the present invention provides an increased transmission capacity by an increased contact width of the flat belt with the at least two crowns on the outer periphery of the pulleys. With this increased transmission capacity the transmission of the present invention also provides a much improved belt life primarily due to the strategic position of the at least one groove as related to the at least two crowns on the outer periphery of the pulleys so that with this particular relationship in mind additional advantages may be obtained with the features of the dependent claims 2 to 5.

### BRIEF DESCRIPTION OF THE DRAWINGS

The nature and advantages of the present invention will be made more apparent from the following description together with the accompanying drawings, in which
Fig. 1 is an enlarged sectional view showing a main part of a conventional belt transmission for tests in comparison with the belt transmission of the present invention;
Fig. 2 is a diagram for showing the pressure distribution characteristic in the belts of such a conventional belt transmission;
Figs. 3a and 3b are diagrams showing the pressure distribution characteristic in a belt of another conventional belt transmission;
Fig. 4 is a sectional view similar to Fig. 1 and showing a first embodiment of the present invention;
Fig. 5 is an enlarged partial sectional view showing the groove of the belt of this first embodiment:
Fig. 6 is a view similar to Fig. 5 and showing a variation of the groove in the belt;
Fig. 7 is a diagram showing the pressure distribution characteristic in the belt of the first embodiment;
Fig. 8 is a view similar to Fig. 1 and showing a second embodiment of the present invention;
Fig. 9 is a view similar to Fig. 1 and showing a third embodiment of the present invention;
Fig. 10. is a view similar to Fig. 1 and showing a forth embodiment of the present invention;
Fig. 11 is a graph showing a change in the characteristic of transmission capacity in accordance with the width of the belt of the belt transmission according to Fig. 1, Fig. 5 and Fig. 10;
Fig. 12 is a graph showing a change in the characteristic of transmission capacity in accordance with the width of the belt of the belt transmission according to Fig. 5 and Fig. 9;
Fig. 13 is a graph showing a change in the characteristic of transmission capacity in accordance with the width of the belt of a conventional belt transmission; and
Fig. 14 is a sectional view similar to Fig. 1 of a conventional belt transmission.

### DESCRIPTION OF PREFERRED EMBODIMENTS

Fig. 1 shows a conventional belt transmission A as disclosed for example in FR-A-1 131 923. The belt transmission A comprises a flat pulley 1 for transmitting a high load and a flat belt means 4 reeved around the pulley 1. The outer periphery of the pulley 1 is a generally cylindrical surface spaced at a uniform distance from the center of rotation (not shown) of the pulley 1 and four crowns 3 are arranged in a row in the width direction of the pulley 1 on this outer periphery. Therefore, the crowns 3 are all at the same distance from the shaft (not shown) on which the pulley is mounted and the crowns 3, have the same width w, height h and radius of curvature R, respectively.

The flat belt means 4 comprises four belt members 5 separated from each other in the width direction. Each of the belt members 5 comprises a belt body 6 and a plurality of cores 7 embedded in the belt body 6 and extending in the longitudinal direction of the belt member. The width of each belt member 5 corresponds to the width w of the corresponding crown 3.

Since four crowns 3 are provided in the width direction of the pulley on the outer periphery of the pulley 1, the bearing stress generated in the flat belt means 4 peaks at the centre in the width direction of the respective belt members 5 corresponding to the respective crowns 3 on the pulley 1 as shown in Fig. 2. In other words, the bearing stress is distributed more evenly in the width direction of the flat belt 4 as the whole than where there is only a single crown and a single flat belt. As a result, the maximum value δ max of the bearing stress at each crown 3 of the pulley 1 can be controlled even if the overall width of the flat pulley 1 is increased, and the maximum bearing stress in the belt means 4 does not exceed the capacity of any belt member, with the result that transmission capacity can be increased.

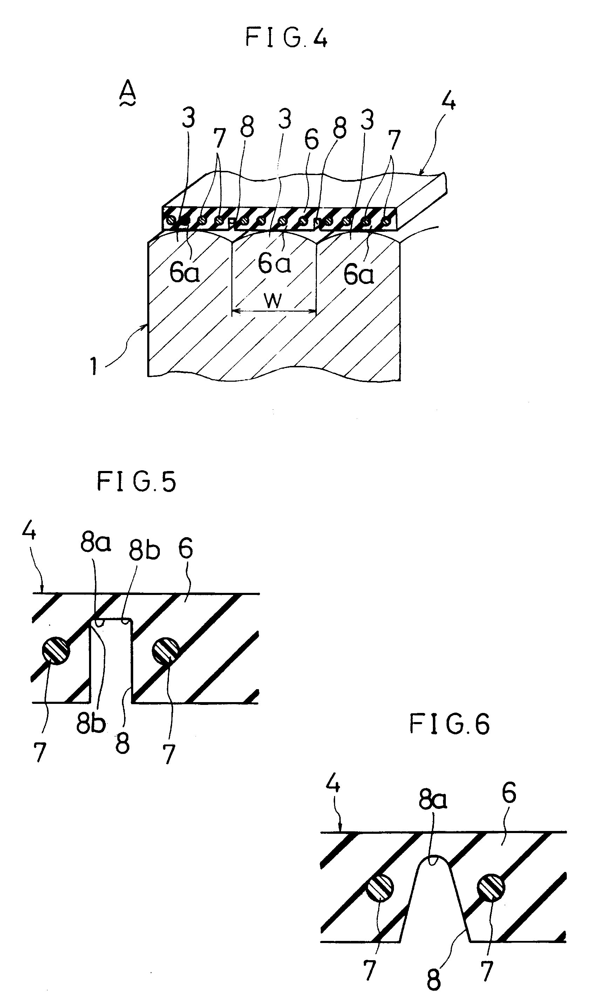

Fig. 4 shows a a belt transmission according to a first embodiment of the present invention. In this embodiment, three crowns 3 are provided in the width direction on the outer periphery of the pulley 1. The flat belt means 4 comprises a belt body 6 made of rubber and having a plurality of endless cores 7 made of a resin and embedded in parallel to each other in the belt body 6. Two grooves 8 with bottoms extending in the longitudinal direction of the bolt are formed at positions corresponding to one-third and two-thirds of the bolt width in the width direction of the belt, the grooves being in the inner peripheral surface of the belt body 6 which is in contact with the pulley 1. Each groove 8 extends between adjacent cores 7 and its bottom is nearer to the outer peripheral surface of the belt than the position of the cores 7 as shown in Fig. 5. The groove 8 can have a rectangular cross-section and the corners 8b and 8b between its bottom 8a and the side walls thereof are circular arc surfaces. More specifically, for example, in a flat belt 4 having a width of 38.1 mm and a thickness of 3.5 mm and cores 7 embedded at a positions spaced 1.5 mm from the outer peripheral surface, grooves 8 are formed at positions corresponding to one-third and two-thirds of the belt width and in the width direction thereof, which are 1 mm and 2.6 mm in width and depth, respectively. Alternatively, the groove 8 can have a V-shaped cross-section and its bottom 8a can be a circular arc surface. Also, the groove 8 can be a shallow groove having the bottom nearer to the inner surface of the belt than the position of the cores 7.

The position of the grooves is between the crowns 3 of the pulley. In other words, the crown 3 is formed at the position corresponding to a part 6a in the belt body 6 in which no groove 8 is formed. In addition, the width of the part 6a in the belt body 6 in which the groove 8 is not formed is approximately the same as the width w of the crown 3 of the pulley 1.

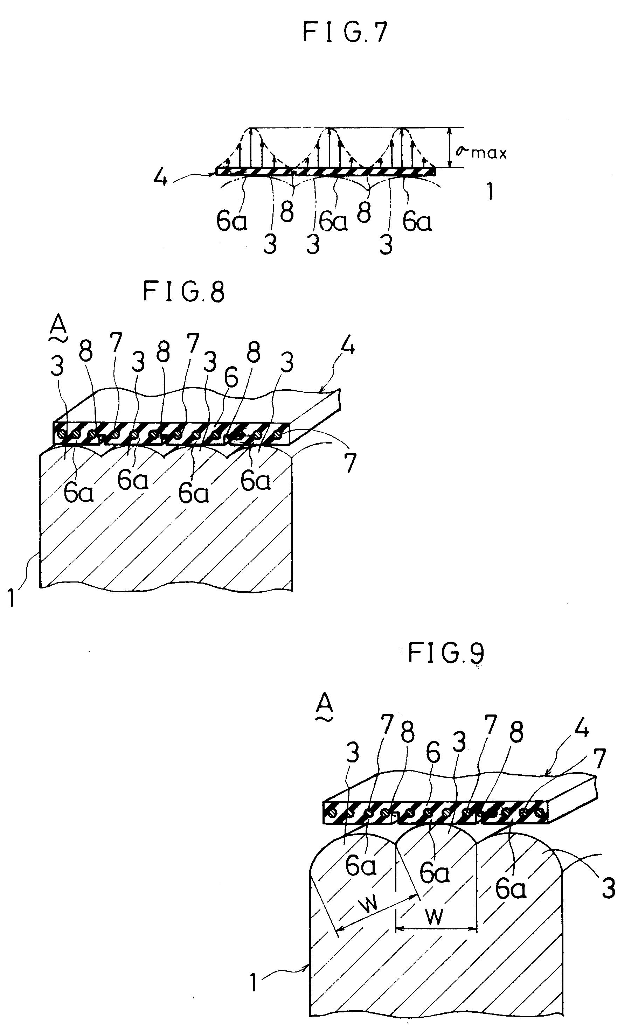

Therefore, since in this embodiment two grooves 8 are formed in the width direction of the belt 4 in the inner peripheral surface and three crowns 3 are provided on the outer periphery of the pulley at positions corresponding to the parts 6a of the belt 4 in which the grooves are not formed, the bearing stress in the flat belt 4 peaks the centers of the parts 6a corresponding to each of the crowns 3 on the pulley 1 as shown in Fig. 7. Therefore, similar to the above described embodiment, the bearing stress is distributed more evenly in the belt width direction across the whole of the width of the flat belt 4, which limits the maximum bearing stress at the crowns 3 of the pulley 1, with the result that the shearing stress of the belt 4 does not exceed its maximum and transmission capacity can be increased.

Fig. 8 shows a second embodiment of the present invention which is similar to the first embodiment in that grooves 8 are formed in the inner peripheral surface of the flat belt 4, but in this embodiment, three grooves 8 are provided and four crowns 3 are formed in the width direction of the pulley in accordance with the number of the grooves 8. The same effect as that in the above described embodiment is provided in this embodiment.

Fig. 9 shows a third embodiment of the present invention. Whereas in the first and second embodiments the outer periphery of the pulley on which crowns 3 are formed is a generally cylindrical surface with the parts spaced at the same distance from the center of rotation of the pulley, the outer periphery of the pulley 1 in this embodiment is in form of a circular arc such that the center in a width direction is farther from the center of rotation of the pulley than the two sides thereof. Three crowns 3 are arranged in a row in the pulley width direction on the outer periphery. The construction of the flat belt 4 is the same as in the first embodiment (shown in Fig. 4). In this embodiment, transmission capacity is further improved over the capacity in the first and second embodiments.

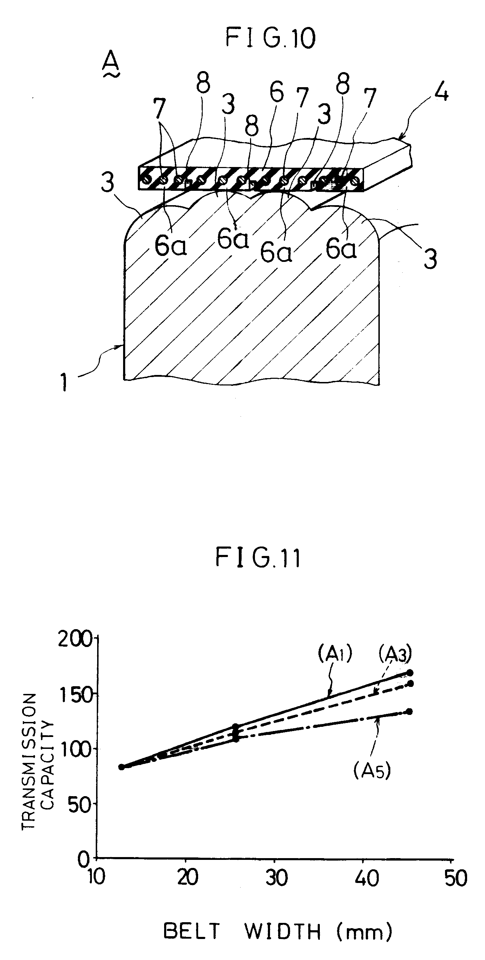

Fig. 10 shows a forth embodiment of the present invention which is similar to the third embodiment, except. that the number of crowns 3 and grooves 8 are four and three, respectively instead of three and two. Otherwise the construction is the same as that in the third embodiment, and the same effect can be achieved.

In a further embodiment, a flat belt 4 having grooves 8 in the inner peripheral surface as in the above embodiment can be used with a conventional pulley as shown in Fig. 14. having one crown on the outer periphery. In this case, the belt 4 is bent along the crown of the pulley because of the grooves, with the result that the contact width of the belt with the pulley can be increased and the transmission capacity can be raised.

Finally, a description will be given of a specific example. Three kinds of belt transmissions A1, A3 and A5 corresponding to the conventional type according to the Fig. 1 embodiment, and to the second and forth embodiments, respectively were made. Also, three kinds of flat belts 4 with widths of 12.7 mm, 25.4 mm and 45 mm were prepared and three kinds of flat pulleys 1 with widths corresponding to those of the flat belts 4 and a diameter of 100 mm were provided. More specifically, when the belt width was 45 mm, three crowns 3 were formed on the pulley and when it was 25.4 mm, two crowns 3 were formed. In addition, when it was 12.7 mm, the conventional one crown was provided. The crown 3 of the pulley 1 had a radius of 450 mm. Each belt 4 was reeved around a pair of spaced flat pulleys 1 and one pulley 1 was rotated at 2600 rpm under a shaft load of 200 kg and the transmission capacity was tested. As a result, the characteristic shown in Fig. 11 was obtained. In addition, the slip ratio between the pulley 1 and the, belt 4 was 2%.

The same test was made on the two kinds of belt transmissions A2 and A4 corresponding to the first and third embodiments, respectively. As a result, the characteristic shown in Fig. 12 was obtained. As is apparent from the characteristics shown in Figs. 11 and 12, it is seen that belt transmission capacity will not reach a limit even if the belt width is greatly increased according to the present invention, as compared with the conventional belt transmission the characteristic of which is shown in Fig. 14, and it is possible to increase transmission capacity in accordance with the increase in the belt width.

## Claims

1. A flat belt and pulley transmission comprising two spaced flat pulleys (1) and a single flat belt (4) reeved around these flat pulleys, wherein
- said flat belt (4) comprises a belt body (6) having a plurality of embedded endless cores (7) and being provided with at least one groove (8) that extends between two adjacent cores in the longitudinal direction of its inner peripheral surface which is in contact with said flat pulleys (1), said groove (8) having such a depth that its bottom (8a) is nearer to the outer peripheral surface of said belt body (6) than the position of said adjacent cores (7);
- each of said flat pulleys (1) has at least two crowns (3) on its outer periphery and spaced in the width direction thereof so that the groove (8) of said flat belt (4) is aligned with a part of the pulley other than that on which such a crown is formed.

2. A flat belt and pulley transmission according to claim 1, wherein the crowns (3) of each flat pulley (1) are arranged at equal distances from the center of rotation of the pulley.

3. A flat belt and pulley transmission according to claim 1 or claim 2, wherein the outer periphery of each flat pulley (1) is substantially in the form of a cylindrical arc in the width direction, and the center in the width direction of each pulley is farther from the center of rotation of the pulley than the ends thereof.

4. A flat belt and pulley transmission according to any of the claims 1 to 3, wherein the groove (8) of the flat belt (4) has a rectangular cross-section of which the corners (8b) between its bottom (8a) and its sidewalls are each in the form of a circular arc.

5. A flat belt and pulley transmission according to any of the claims 1 to 3, wherein the groove (8) of the flat belt (4) has a V-shaped cross-section of which the bottom (8a) is in the form of a circular arc.

## Patentansprüche

1. Flachriemen- und Riemenscheibe-Transmission mit zwei voneinander beabstandeten glatten Riemenscheiben (1) und einem einzigen Flachriemen (4), der um diese glatten Riemenscheiben herum geschlungen ist, wobei
- der Flachriemen (4) einen Riemenkörper (6) mit einer Vielzahl eingebetteter Endloskerne (7) aufweist und mit wenigstens einer Nut (8) versehen ist, die zwischen zwei benachbarten Kernen in der Längsrichtung seiner inneren Umfangsfläche verläuft, welche mit den glatten Riemenscheiben (1) in Berührung ist, wobei die Nut (8) eine solche Tiefe hat, daß ihr Boden (8a) näher an der äußeren Umfangsfläche des Riemenkörpers (6) ist als die Position der benachbarten Kerne (7);
- jede der glatten Riemenscheiben (1) wenigstens zwei Scheitel (3) an ihrem Außenumfang und in Richtung der Breite beabstandet voneinander aufweist, sodaß die Nut (8) des Flachriemens (4) mit einem Teil der Riemenscheibe anders als demjenigen fluchtet, an welchem ein solcher Scheitel ausgebildet ist.

2. Flachriemen- und Riemenscheibe-Transmission nach Anspruch 1, bei welcher die Scheitel (3) jeder glatten Riemenscheibe (1) in gleichen Entfernungen von der Mitte der Drehung der Riemenscheibe angeordnet sind.

3. Flachriemen- und Riemenscheibe-Transmission nach Anspruch 1 oder Anspruch 2, bei welcher der Außenumfang jeder glatten Riemenscheibe (1) im wesentlichen in der Form eines zylindrischen Bogens in Richtung der Breite ist, und die Mitte jeder Riemenscheibe in Richtung der Breite weiter von der Mitte der Drehung der Riemenscheibe entfernt ist als die Enden davon.

4. Flachriemen- und Riemenscheibe-Transmission nach einem der Ansprüche 1 bis 3, bei welcher die Nut (8) des Flachriemens (4) einen rechteckigen Querschnitt hat, dessen Ecken (8b) zwischen seinem Boden (8a) und seinen Seitenwänden jeweils in der Form eines Kreisbogens sind.

5. Flachriemen- und Riemenscheibe-Transmission nach einem der Ansprüche 1 bis 3, bei welcher die Nut (8) des Flachriemens (4) einen V-förmigen Querschnitt hat, dessen Boden (8a) in der Form eines Kreisbogens ist.

## Revendications

1. Mécanisme de transmission à courroie plate et poulie, comprenant deux poulies plates (1)écartées et une seule courroie plate (4) passée dans ces poulies plates, dans lequel
- ladite courroie plate (4) comprend un corps de courroie (6) à une pluralité des âmes continues en retrait (7), qui est prévu d'au moins une rainure (8) qui s'étend entre deux âmes contiguës en sens longitudinal de sa surface intérieure périphérique qui se trouve en contact avec lesdites poulies plates (1), ladite rainure (8) ayant une profondeur telle que son fond (8a) soit plus proche à la surface extérieure périphérique dudit corps de courroie (6) que la position desdites âmes continues (7);
- chacune desdites poulies plates (1) présente au moins deux sommets (3) sur sa périphérie extérieure, qui sont y espacés en sens transversal de façon que ladite rainure (8) de ladite courroie plate (4) soit alignée sur une partie de ladite poulie, autre que celle sur laquelle est formé un tel sommet.

2. Mécanisme de transmission à courroie plate et poulie selon la revendication 1, dans lequel lesdits sommes (3) de chaque poulie plate (1) sont disposés aux distances égales du centre de rotation de ladite poulie.

3. Mécanisme de transmission à courroie plate et poulie selon la revendication 1 ou 2, dans lequel la périphérie extérieur de chaque poulie plate (1) présente, en sens transversal, essentiellement la forme d'un arc cylindrique, et le centre, en sens transversal de chaque poulie, est plus loin du centre de rotation de la poulie que les extrémités de la dernière.

4. Mécanisme de transmission à courroie plate et poulie selon la revendication 3, dans lequel ladite rainure (8) de ladite courroie plate (4) a un profil en travers rectangulaire, dont chacun des coins (8b) entre son fond (8a) et ses parois latérales présente la forme d'un arc de cercle.

5. Mécanisme de transmission à courroie plate et poulie selon une quelconque des revendications 1 a 3, dans lequel ladite rainure (8) de ladite courroie plate (4) a un profil en travers en V dont le fond (8a) présente la forme d'un arc de cercle.
